# FASCICULE DE BREVET EUROPEEN

(11) **EP 4 298 954 B1**
(45) Date de publication et mention de la délivrance du brevet: **29.07.2026**
(21) Numéro de dépôt: 23181805.5
(22) Date de dépôt: 27.06.2023
(51) Int. Cl.: A45D 34/02, C03C 17/28, C03C 17/00, A45D 34/00

(54) **PROCÉDÉ DE FABRICATION D'UN RÉCIPIENT EN VERRE POURVU D'UN ACCESSOIRE DÉCORATIF INTÉGRÉ ET RÉCIPIENT DÉCORÉ EN VERRE CORRESPONDANT**
VERFAHREN ZUR HERSTELLUNG EINES GLASBEHÄLTERS MIT INTEGRIERTEM DEKORZUBEHÖR UND ENTSPRECHENDER GLASDEKORBEHÄLTER
METHOD FOR PRODUCING A GLASS CONTAINER WITH AN INTEGRATED DECORATIVE ACCESSORY AND CORRESPONDING DECORATED GLASS CONTAINER

(30) Priorité: 28.06.2022 FR 2206485
(43) Date de publication de la demande: 03.01.2024
(73) Titulaire: Verescence France, 92800 Puteaux (FR)
(72) Inventeur: NIZAN, Lionel, 76260 EU (FR); MARDESSON, Viridiana, Amalasonthe, Daphné, 76260 EU (FR)
(74) Mandataire: Cabinet Didier Martin

(56) Documents cités:
- DE-U1- 202019 004 107
- US-A1- 2007 023 314
- MAGS FRAGS FRAGRANCE REVIEWS: "SCANDAL POUR HOMME FRAGRANCE REVIEW - JEAN PAUL GAULTIER", 21 November 2021 (2021-11-21), XP093024327, Retrieved from the Internet <URL:https://www.youtube.com/watch?v=AeCk3RjeNYY> [retrieved on 20230213]
- DOUGLAS: "DEIN APP-GESCHENK: Ab 89 EUR Bestellwert gibt 's eine Überraschungs-Bag für dich! Code: GLAM Homepage / Parfum / Herrendüfte / Parfum / Jean Paul Gaultier Scandal Homme", 13 July 2021 (2021-07-13), XP093023359, Retrieved from the Internet <URL:https://www.douglas.de/de/p/5010037066> [retrieved on 20230213]

## Description

La présente invention se rapporte au domaine général de l'emballage, et plus précisément aux corps creux pourvus d'une paroi en verre, du genre bouteilles, flacons ou pots, formant des récipients destinés à contenir un produit, tel qu'en particulier un produit cosmétique liquide, visqueux ou pâteux, et par exemple un parfum corporel liquide.

La présente invention concerne plus précisément un procédé de fabrication d'un récipient décoré en verre destiné à contenir un produit cosmétique, par exemple un parfum corporel.

La présente invention concerne également un récipient décoré en verre destiné à contenir un produit cosmétique, par exemple un parfum corporel.

Dans le secteur de l'emballage primaire des produits cosmétiques, tels que par exemple des crèmes de soin ou des parfums corporels, l'utilisation de verre pour la réalisation de récipients est particulièrement prisée, compte-tenu du caractère noble généralement prêté au verre par les consommateurs, et des qualités objectives de transparence, de robustesse, et de stabilité mécanique et chimique de ce matériau. C'est pourquoi, la totalité ou quasi-totalité des parfums corporels liquides, et en particulier des parfums considérés comme « haut de gamme » ou « de luxe » est contenue dans des flacons en verre. Les qualités esthétiques d'un flacon à parfum s'avèrent d'ailleurs extrêmement importantes pour l'attractivité commerciale globale d'un parfum. Dans ce contexte, il s'avère donc essentiel de proposer un récipient dont l'esthétique est très nettement différente de celle des récipients de la concurrence, et présente un caractère particulièrement attractif et valorisant pour le produit cosmétique contenu dans le récipient.

A ce titre, il est connu de décorer des récipients en verre à l'aide d'un ou plusieurs accessoires décoratifs externes, tels que par exemple des pièces décoratives en métal ou en plastique, ou encore des étiquettes en papier, rapporté(s) et solidarisé(s) à la paroi des récipients par collage.

Les récipients ainsi décorés sont généralement très appréciés des consommateurs. Pour autant, la mise en œuvre de tels accessoires décoratifs pose un certain nombre de problèmes, en particulier en matière d'aptitude au recyclage de ces récipients. En effet, si le verre présente l'intérêt de constituer un matériau qui peut être réutilisé quasiment à l'infini, la présence d'accessoires décoratifs solidarisés au verre, et non prévus pour pouvoir en être séparés par les consommateurs avant que les récipients ne soient jetés dans une borne de collecte sélective de verre, peut empêcher en pratique un recyclage efficace du verre des récipients.

Il arrive en outre parfois que, bien qu'étant normalement fermement collés à la paroi des récipients pour ne pas pouvoir en être séparés en usage normal de ces derniers, de tels accessoires décoratifs peuvent néanmoins se détacher de la paroi des récipients, par exemple lors du transport ou d'une manipulation inappropriée desdits récipients. Cela nuit évidemment à la satisfaction du consommateur et à la perception qu'à ce dernier des qualités du produit cosmétique contenu dans le récipient. Par ailleurs, la présence d'adhésif pour coller les accessoires décoratifs peut nuire à l'esthétique des récipients, et les matériaux utilisés pour fabriquer ces accessoires décoratifs peuvent avoir un impact non négligeable sur le coût de fabrication desdits récipients.

Les objets assignés à l'invention visent en conséquence à porter remède aux différents inconvénients exposés dans ce qui précède et à proposer en particulier un nouveau procédé de fabrication qui permet d'obtenir des récipients décorés pour produits cosmétiques qui présentent un effet de décoration remarquable tout en ayant un impact environnemental particulièrement limité.

Un autre objet de l'invention vise à proposer un nouveau procédé de fabrication qui est apte à être mis en œuvre de façon industrielle.

Un autre objet de l'invention vise à proposer un nouveau procédé de fabrication qui est facile et peu coûteux à mettre en œuvre.

Un autre objet de l'invention vise à proposer un nouveau procédé de fabrication qui permet d'obtenir des récipients décorés qui sont particulièrement robustes.

Un autre objet de l'invention vise à proposer un nouveau récipient décoré pour produit cosmétique qui présente un effet de décoration remarquable tout en ayant un impact environnemental particulièrement limité.

Un autre objet de l'invention vise à proposer un nouveau récipient décoré qui est apte à être produit de façon industrielle.

Un autre objet de l'invention vise à proposer un nouveau récipient décoré qui est facile et peu coûteux à fabriquer.

Un autre objet de l'invention vise à proposer un nouveau récipient décoré qui est particulièrement robuste.

Les objets assignés à l'invention sont atteints à l'aide d'un procédé de fabrication d'un récipient décoré en verre destiné à contenir un produit cosmétique, par exemple un parfum corporel, comprenant :
- une étape de fabrication ou de fourniture d'un récipient à paroi en verre, laquelle paroi délimite une cavité de réception pour le produit cosmétique à contenir et présente une face interne située en regard de ladite cavité et une face externe opposée, ladite face externe présentant une portion décorative délimitée au moins partiellement par un pourtour et présentant un fond en creux par rapport audit pourtour, ladite portion décorative comportant un support décoratif qui vient de matière avec le verre formant la face externe et qui fait saillie dudit fond ; et
- une étape de formation à la surface du support décoratif d'un revêtement décoratif adhérant audit support décoratif.

Les objets assignés à l'invention sont par ailleurs atteints à l'aide d'un récipient décoré en verre destiné à contenir un produit cosmétique, par exemple un parfum corporel, comprenant une paroi en verre, laquelle paroi délimite une cavité de réception pour le produit cosmétique à contenir et présente une face interne située en regard de ladite cavité et une face externe opposée, ladite face externe présentant une portion décorative délimitée au moins partiellement par un pourtour et présentant un fond en creux par rapport audit pourtour, ladite portion décorative comportant un support décoratif qui vient de matière avec le verre formant la face externe et qui fait saillie dudit fond, la surface du support décoratif étant pourvue d'un revêtement décoratif qui adhère audit support décoratif.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :
- la figure 1 illustre, selon une vue de face, un exemple de récipient en verre obtenu à l'issue de l'étape de fabrication ou de fourniture d'un récipient à paroi en verre du procédé conforme à l'invention ;
- la figure 2 illustre, selon une vue en perspective, le récipient de la figure 1 ;
- la figure 3 illustre, selon une vue latérale, le récipient des figures 1 et 2 ;
- la figure 4 illustre, selon une vue latérale partielle en coupe, de manière schématique, un détail du récipient des figures 1 et 3 au niveau de la zone entourée en pointillés à la figure 3 ;
- la figure 5 illustre, selon une vue de face, de manière schématique, un exemple de récipient décoré en verre obtenu par le procédé conforme à l'invention à partir du récipient des figures 1 à 4. La figure 5 illustre, en tant que tel, de manière schématique, un exemple d'un récipient décoré conforme à l'invention ;
- la figure 6 illustre, selon une vue en perspective, le récipient décoré de la figure 5 ;
- la figure 7 illustre, selon une vue latérale partielle en coupe, de manière schématique, un détail du récipient décoré des figures 5 et 6 au niveau de la zone entourée en pointillés à la figure 3, selon une variante dans laquelle le revêtement décoratif ne recouvre qu'une portion seulement de la surface du support décoratif ;
- la figure 8 illustre, selon une vue latérale partielle en coupe, de manière schématique, un détail du récipient décoré des figures 5 et 6 au niveau de la zone entourée en pointillés à la figure 3, selon une variante dans laquelle le revêtement décoratif recouvre de manière continue la totalité de la surface du support décoratif.

L'invention concerne un procédé de fabrication d'un récipient 1' en verre destiné à contenir un produit cosmétique. Il peut s'agir d'un produit cosmétique poudreux ou granulaire (maquillage, fond de teint, etc.) ou d'un produit cosmétique liquide (parfum corporel, vernis à ongles, lotion, etc.), visqueux ou pâteux (crème de soin, etc.). Par exemple, le récipient 1 concerné par l'invention est destiné à contenir un produit cosmétique formé par un liquide alcoolique, tel qu'un parfum, et plus précisément un parfum corporel (mélange de substances aromatiques et d'une solution alcoolique). Plus précisément, le procédé selon l'invention est un procédé de fabrication d'un récipient décoré 1', destiné à contenir ledit produit cosmétique. Par « récipient décoré », on entend ici avantageusement un récipient présentant un décor, ou élément décoratif, qui lui confère une apparence esthétique générale particulière visuellement perceptible par un consommateur. Le récipient décoré 1' en question est avantageusement destiné à être fermé à l'aide d'un organe de fermeture (non illustré), constitué par exemple par un bouchon. Dans l'exemple illustré aux figures, le récipient décoré 1' est un flacon, destiné par exemple à contenir un parfum corporel. Le récipient décoré 1' présente donc dans ce cas un col délimitant un orifice étroit destiné à être fermé par un bouchon ou par un embout de pulvérisation. L'invention n'est toutefois pas limitée à un flacon, et le récipient décoré 1' peut constituer par exemple un pot, ou tout autre type de contenant, sans pour autant que l'on sorte du cadre de l'invention.

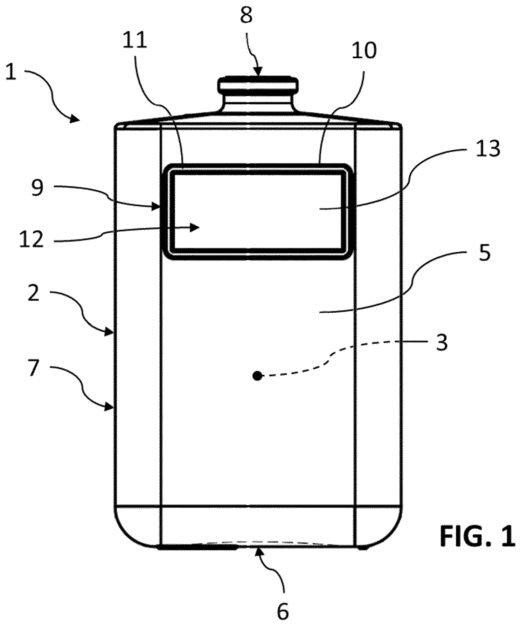

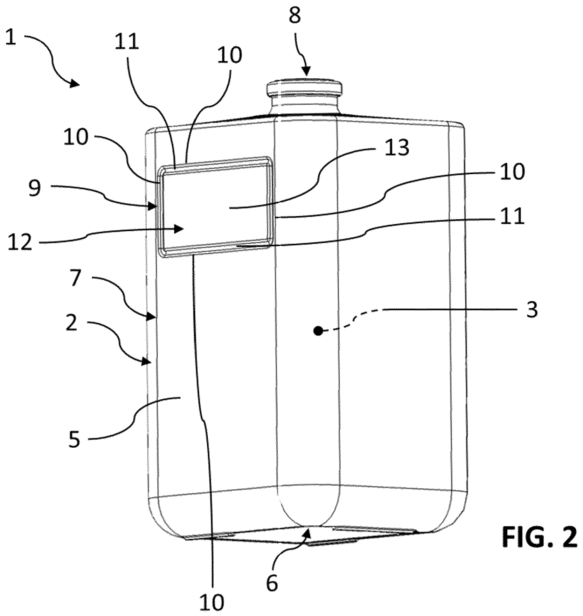

Le procédé conforme à l'invention comprend une étape de fabrication ou de fourniture d'un récipient 1 à paroi 2 en verre, laquelle paroi 2 délimite une cavité 3 de réception pour le produit cosmétique à contenir, c'est-à-dire un espace libre intérieur conformé et configuré pour recevoir et contenir en son sein ledit produit cosmétique. Par souci de simplicité, les éléments et caractéristiques du récipient 1 qui sont similaires ou identiques aux éléments et caractéristiques du récipient décoré 1' obtenu à l'aide du procédé sont désignés par des termes identiques dans la description qui suit et par les mêmes symboles de référence aux figures 1 à 8, dans la mesure où ledit récipient 1 préfigure le récipient décoré 1' dans sa forme générale au moins.

Comme illustré en exemple aux figures 1 à 4 notamment, la paroi 2 du récipient 1 (et donc du récipient décoré 1') présente une face interne 4, située en regard de la cavité 3, et une face externe 5 opposée. Typiquement, la paroi 2 du récipient 1 définit un fond 6 (ou semelle) et une paroi latérale 7 du récipient 1, qui s'élève à partir et à la périphérie dudit fond 6. La paroi 2 du récipient 1 définit avantageusement un orifice 8 qui met en communication la cavité 3 avec l'extérieur, et par l'intermédiaire de laquelle le produit cosmétique pourra être extrait hors de ladite cavité 3.

Comme exposé précédemment, la paroi 2 du récipient 1 est en verre. Le terme « verre » doit être ici pris dans son acception classique, et désigne donc un verre minéral. De préférence, le verre constituant la paroi 2 du récipient 1 est un verre de silice, et en particulier un verre sodocalcique (ou « sodosilicocalcique », plus facilement recyclable qu'un verre borosilicate). Plus préférentiellement encore, le verre constituant la paroi 2 du récipient 1 est en verre minéral blanc ou extra-blanc (selon les définitions usuelles dans le domaine du verre minéral), et donc transparent et incolore dans le domaine du visible pour l'œil humain. Le verre constituant la paroi 2 peut éventuellement inclure ou être formé par du verre PCR (ou « calcin ménager ») et / ou du calcin industriel, c'est-à-dire du verre recyclé issu de la consommation des ménages et / ou de la production industrielle verrière. De manière avantageuse, la paroi 2 du récipient 1 (et donc du récipient décoré 1') constitue une pièce de verre minéral monolithique, c'est-à-dire d'un seul tenant, qui définit en son sein ladite cavité 3.

Conformément à l'invention, la face externe 5 de la paroi 2 en verre présente une portion décorative 9, c'est-à-dire une zone particulière à visée décorative, qui est délimitée au moins partiellement par un pourtour 10 (ou « bord ») et qui présente un fond 11 en creux par rapport audit pourtour 10. Ledit fond 11 est donc agencé en retrait dans la paroi 2 en verre par rapport audit pourtour 10. Typiquement, le fond 11 de la portion décorative 9 présente une face interne 11A, qui est orientée vers l'intérieur du récipient 1 et qui définit avantageusement une portion de la face interne 4 de la paroi 2 en verre de ce dernier, et une face externe 11B opposée, orientée vers l'extérieur du récipient 1. De préférence, ledit pourtour 10 est refermé sur lui-même et délimite donc intégralement ladite portion décorative 9. Le pourtour 10 peut décrire une ligne, une courbe, inscrite dans une surface d'extension moyenne de la face externe 5 de la paroi 2 en verre, comme dans l'exemple illustré aux figures. Alternativement, ledit pourtour 10 peut former une protubérance en verre qui s'étend en saillie d'une surface d'extension moyenne de la face externe 5 de la paroi 2 en verre. En tout état de cause, ledit pourtour 10 définit avantageusement une ligne, une courbe, à partir de laquelle la face externe 5 s'enfonce localement dans l'épaisseur de la paroi 2 en direction du fond 11 de la portion décorative 9.

Avantageusement, comme dans l'exemple illustré au figures, ladite portion décorative 9 est portée par la paroi latérale 7 du récipient 1, de sorte à être particulièrement visible lorsque le récipient 1 repose sur un support stable par l'intermédiaire de son fond 6. Par exemple, toujours comme dans l'exemple illustré aux figures, ladite portion décorative 9 peut être portée par une portion de la paroi latérale 7 du récipient 1 qui est sensiblement plane et lisse. Eventuellement, ladite portion décorative 9 pourrait être portée par des portions (ou « facettes ») de la paroi latérale 7 du récipient 1 qui sont contigües et qui s'étendent chacune sensiblement dans un plan, lesquels plans sont sécants.

Selon l'invention, ladite portion décorative 9 comporte un support décoratif 12 (ou « base décorative » ou encore « conformation décorative ») qui vient de matière avec le verre formant la face externe 5 de la paroi 2 et qui fait saillie du fond 11 de la portion décorative 9. En d'autres termes, ledit support décoratif 12 forme une pièce de verre monolithique, d'un seul tenant, avec la paroi 2, et fait saillie de la face externe 11B du fond 11 de la portion décorative 9 vers l'extérieur du récipient 1. Ledit support décoratif 12 appartient donc à la paroi 2 en verre, et est formé par continuité de matière avec cette dernière.

Selon une variante, le support décoratif 12 peut former une portion de verre pleine, comme dans l'exemple illustré aux figures, de sorte que le support décoratif 12 présente une surface 13 en verre sensiblement continue. Selon une autre variante, le support décoratif 12 peut former une portion de verre ajourée, et former par exemple un motif tridimensionnel en verre ajouré, laissant apparaître localement le fond 11 de la portion décorative 9 par des jours ménagés dans l'épaisseur du support décoratif 12.

Selon une variante, le support décoratif 12 recouvre sensiblement l'intégralité du fond 11 de la portion décorative 9, de sorte que la partie visible du fond 11 peut être alors réduite à ligne, à une courbe, périphérique du support décoratif 12 à partir de laquelle ce dernier s'étend en saillie dudit fond 11. Selon une autre variante, le support décoratif 12 ne recouvre qu'une partie du fond 11 de la portion décorative 9, de sorte qu'une plus grande partie du fond 11 est donc visible dans ce cas, par exemple entre le pourtour 10 de la portion décorative 9 et le support décoratif 12.

Conformément à l'invention, le procédé de fabrication du récipient décoré 1' comprend une étape de formation à la surface 13 du support décoratif 12 d'un revêtement décoratif 14 qui adhère audit support décoratif 12. Le revêtement décoratif 14 forme donc avantageusement une couche mince de plaquage décoratif agencée à la surface 13 du support décoratif 12 en verre. Le revêtement décoratif 14 constitue ainsi avantageusement une couche superficielle qui recouvre une partie au moins, et de préférence la totalité de, la surface 13 du support décoratif 12, et contribue à l'effet décoratif de la portion décorative 9 en apportant à cette dernière une texture particulière (couleur, brillance / matité, motifs, aspect de surface, etc.). Avantageusement, le revêtement décoratif 14 n'existe pas, en tant que tel, préalablement à ladite étape de formation. Le revêtement décoratif 14 peut être un revêtement monocouche ou, au contraire, comprendre une pluralité de couches superposées, et donc former un revêtement multicouche. Avantageusement, la surface de la portion de la face externe 5 de la paroi 2 en verre qui s'étend au-delà dudit pourtour 10, et en dehors de la portion décorative 9, est en revanche dépourvue dudit revêtement décoratif 14. De préférence, le fond 11 de la portion décorative 9 est dépourvu dudit revêtement décoratif 14. Cela contribue avantageusement à mieux faire ressortir visuellement le support décoratif 12 et le revêtement décoratif 14 porté par ce dernier.

L'invention repose ainsi en substance sur l'idée astucieuse de former un « accessoire décoratif intégré », c'est-à-dire un accessoire décoratif (ou élément de décoration) qui ne constitue pas une pièce solide distincte de la paroi 2 en verre du récipient 1 et qui serait rapportée et fixée à cette dernière (par exemple par collage), mais qui est au contraire essentiellement formé par la combinaison d'une conformation locale particulière (support décoratif 12) de la paroi 2 en verre elle-même et par un revêtement décoratif 14 adhérant à cette conformation de verre.

Le procédé selon l'invention permet dès lors avantageusement d'imiter de manière très convaincante la mise en œuvre d'un accessoire décoratif externe classique rapporté, qui est généralement très appréciée des consommateurs sur le plan esthétique, tout en évitant néanmoins un certain nombre d'inconvénients liés à la mise en œuvre d'un tel accessoire décoratif externe classique.

En effet, l'agencement du support décoratif 12 en saillie d'un fond 11 en creux, tel que proposé, permet d'imiter un renfoncement qui est généralement mis en œuvre pour recevoir en son sein un accessoire décoratif externe classique. Le support décoratif 12 définit avantageusement une géométrie et un volume de cet « accessoire décoratif intégré », qui peut alors imiter la géométrie et le volume d'un accessoire décoratif externe classique rapporté. Le revêtement décoratif 14 contribue avantageusement quant à lui à définir un aspect visuel (couleur, motif, etc.) de l'« accessoire décoratif intégré », qui peut alors imiter un aspect visuel d'un accessoire décoratif externe classique rapporté. Pour autant, un tel « accessoire décoratif intégré » obtenu selon le procédé de l'invention permet d'obtenir un récipient décoré 1' sans recourir à l'assemblage de matériaux autres que le verre, tel qu'en particulier le plastique, le métal, le papier autocollant, le cuir, etc. Il devient ainsi possible de concevoir et de fabriquer des récipients décorés en verre pour produit cosmétique qui, tout en présentant une apparence esthétique particulièrement distinctive et attrayante pour le consommateur, n'en demeurent pas moins aisément recyclables. L'agencement du support décoratif 12 en saillie d'un fond 11 en creux permet par ailleurs, sur le plan esthétique, de mettre en valeur ledit « accessoire décoratif intégré », en soulignant visuellement le contour de ce dernier par un relief en creux, par exemple sous la forme d'une gorge périphérique comme illustré en exemple aux figures, qui génère avantageusement un effet optique. En outre, puisque le procédé selon l'invention ne nécessite pas de fabriquer séparément un accessoire décoratif externe, puis d'assembler ce dernier sur un récipient en verre, le procédé selon l'invention permet d'obtenir des récipients décorés 1' de manière plus rapide et moins onéreuse. De plus, l'absence d'assemblage permet d'éviter la mise en œuvre de plots de colle visibles, qui viendraient dégrader l'aspect esthétique du récipient décoré 1'. Par ailleurs, le procédé selon l'invention permet d'obtenir des récipients décorés 1' plus robustes et plus durables, dans la mesure où il n'existe aucun risque de désolidarisation de l'« accessoire décoratif intégré » et du récipient 1 en verre.

Avantageusement, le procédé de fabrication du récipient décoré 1' est dépourvu d'étape d'assemblage, à la face externe 5 de la paroi 2 en verre du récipient 1, d'un élément décoratif externe (ou « accessoire décoratif externe ») solide en un matériau différent du verre formant ladite paroi 2. L'intérêt de l'invention s'en trouve ainsi renforcé.

De préférence, le récipient 1 (et donc le récipient décoré 1') est en verre moulé. A ce titre, l'étape de fabrication dudit récipient 1 comprend avantageusement une opération de moulage à partir d'une paraison de verre fondu. Typiquement, une telle opération de moulage est réalisée à l'aide d'un moule ébaucheur, pour former une ébauche à partir d'une paraison de verre fondu par pression (procédé dit « pressé-soufflé ») ou par soufflage (procédé dit « soufflé-soufflé »), et d'un moule finisseur dans lequel est ensuite transférée l'ébauche afin de conférer au récipient 1 sa forme finale par soufflage de l'ébauche. De manière plus préférentielle encore, la portion décorative 9 du récipient 1 est formée au cours de ladite opération de moulage. En d'autres termes, la portion décorative 9 est formée par moulage, simultanément au moulage du récipient 1 et donc de manière concomitante au formage de la paroi 2 en verre de ce dernier. A ce titre, il est avantageusement possible de prévoir qu'une face interne du moule finisseur utilisé pour l'opération de moulage du récipient 1 est pourvue d'un motif en relief définissant un négatif de la portion décorative 9 à former au niveau de la face externe 5 de la paroi 2 en verre du récipient 1. Cela permet notamment de fabriquer des récipients décorés 1' à l'échelle industrielle, de manière répétable, rapide simple et peu onéreuse. Alternativement, mais de manière toutefois moins avantageuse, la portion décorative 9 du récipient 1 pourrait être formée postérieurement à l'opération de moulage du récipient 1, par exemple par gravure de la face externe 5 de la paroi 2 de ce dernier.

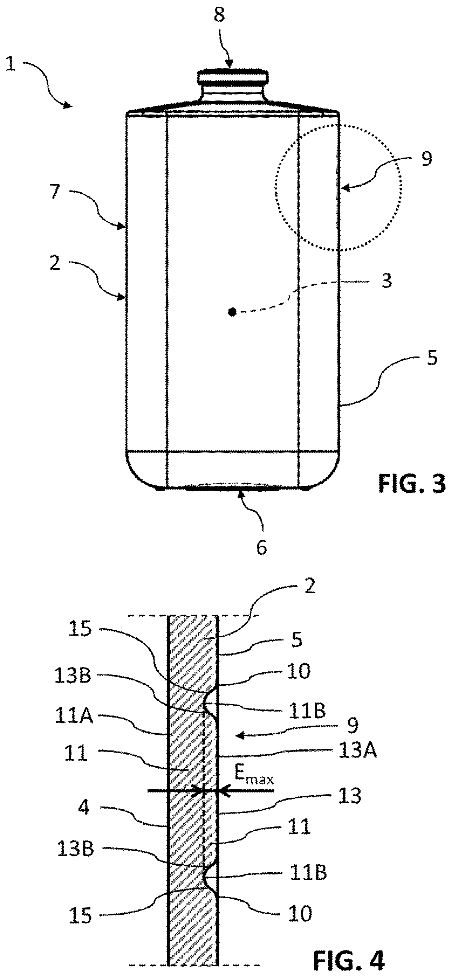

Comme illustré en exemple aux figures (figure 4 en particulier), la surface 13 du support décoratif 12 peut typiquement comprendre une portion de surface supérieure 13A, qui est prolongée par au moins une portion de surface latérale 13B, qui relie ladite portion de surface supérieure 13A à la face externe 11B du fond 11 de la portion décorative 9. Ladite portion de surface latérale 13B peut ainsi correspondre à la surface d'un ou plusieurs murs latéraux que peut comporter le support décoratif 12 et qui s'élèvent en saillie dudit fond 11. Lesdits murs latéraux définissent ainsi avantageusement un contour du support décoratif 12. Selon l'effet décoratif recherché, la portion de surface supérieure 13A du support décoratif 12 peut être sensiblement plane, ou présenter au contraire un profil tridimensionnel particulier. Par ailleurs, ladite surface 13 peut être prévue lisse, ou au contraire texturée, rugueuse.

Le support décoratif 12 peut présenter des dimensions et épaisseur variables selon notamment l'effet décoratif recherché. En tout état de cause, le support décoratif 12 s'étend préférentiellement en saillie dudit fond 11 (et plus précisément de la face externe 11B de ce dernier) de la portion décorative 9 suivant une épaisseur maximale Emax d'au moins 0,2 mm, de préférence encore d'au moins 0,3 mm, et de préférence d'au plus 3 mm. On entend ici par « épaisseur maximale Emax », la plus grande valeur de l'épaisseur du support décoratif 12, mesurée au droit du fond 11 de la portion décorative 9. Ainsi, l'épaisseur du support décoratif 12 est bien perceptible à l'œil nu, même si elle peut être relativement faible. Selon une variante, l'épaisseur du support décoratif 12 est sensiblement constante, comme dans l'exemple illustré aux figures, et par exemple de 0,5 mm, en vue d'imiter avantageusement la mise en œuvre d'une étiquette décorative autocollante, par exemple en papier ou en carton, ou d'une plaque décorative. Dans ce cas, la portion de surface supérieure 13A peut ainsi être avantageusement sensiblement plane, comme envisagé ci-dessus. Selon une autre variante, l'épaisseur du support décoratif 12 n'est pas constante en tout point du support décoratif 12, et varie au donc au contraire. Dans ce cas, la portion de surface supérieure 13A peut alors ne pas être plane, mais présenter au contraire des points d'altitudes différentes par rapport à la surface de la face externe 11B du fond 11 de la portion décorative 9.

Avantageusement, le support décoratif 12 est relié au fond 11 de la portion décorative 9 par un congé, et non pas par une arête vive, présentant un rayon de courbure d'une valeur préférentiellement comprise entre 0,2 mm et 1,5 mm, plus préférentiellement encore comprise entre 0,5 mm et 1,2 mm, et par exemple égale à 0,5 mm. La mise en œuvre d'un tel congé facilite la fabrication du récipient 1 et la portion décorative 9, en particulier lorsque ces derniers sont formés par moulage du verre. Elle contribue en outre dans une certaine mesure à conférer une excellente résistance mécanique audit support décoratif 12, selon la forme que peut présenter ce dernier. Pour autant, les valeurs préférentielles susvisées dudit rayon de courbure sont avantageusement suffisamment faibles pour que la présence du congé ne nuise pas visuellement à l'imitation d'un accessoire décoratif externe qui serait fixé à la paroi 2 en verre (et qui ne présente donc classiquement pas de congé de raccordement avec le verre de la paroi 2).

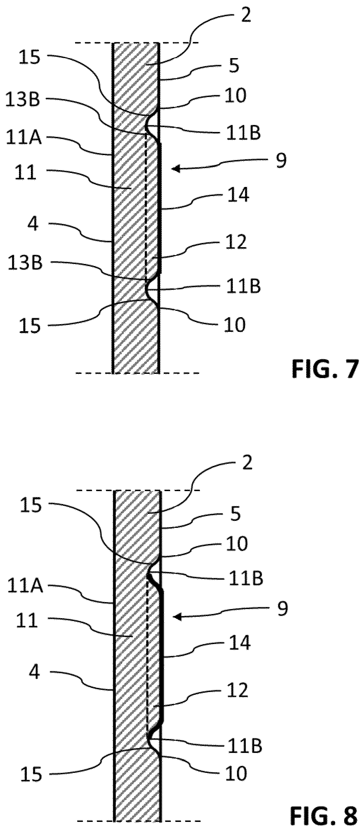

Comme visible par exemple aux figures 4 et 7, la portion décorative 9 peut comporter un ou plusieurs murs latéraux 15, qui relient le pourtour 10 de la portion décorative 9 au fond 11 (et plus précisément à la face externe 11B dudit fond 11) de cette dernière. Avantageusement, le pourtour 10 peut alors être relié audits murs latéraux 15 par un arrondi (ou chanfrein), et non pas par une arête vive, présentant un rayon de courbure d'une valeur préférentiellement comprise entre 0,2 mm et 1,5 mm, plus préférentiellement encore comprise entre 0,5 mm et 1,2 mm, et par exemple égale à 0,6 mm. La mise en œuvre d'un tel arrondi facilite la fabrication du récipient 1 et la portion décorative 9, en particulier lorsque ces derniers sont formés par moulage du verre. Cet arrondi permet en outre de limiter le risque de blessure du consommateur par coupure. Avantageusement, le ou les murs latéraux 15 peuvent être reliés au fond 11 de la portion décorative 9 par un congé, et non pas par une arête vive, présentant un rayon de courbure d'une valeur préférentiellement comprise entre 0,2 mm et 1,5 mm, plus préférentiellement encore comprise entre 0,5 mm et 1,2 mm, et par exemple égale à 0,5 mm. La mise en œuvre d'un tel congé facilite avantageusement là-aussi la fabrication du récipient 1 et la portion décorative 9, en particulier lorsque ces derniers sont formés par moulage du verre.

Selon une variante, l'épaisseur du support décoratif 12 est choisie de manière que la surface 13 dudit support décoratif 12 est entièrement agencée en retrait du pourtour 10 (et donc vers l'intérieur du récipient décoré 1', dans l'épaisseur de la paroi 2 en verre), ou de manière que ladite surface 13 vient (tout au plus) au ras d'un plan contenant ledit pourtour 10 (ou une ligne de crête dudit pourtour 10) comme dans l'exemple illustré aux figures. Cela peut s'avérer intéressant, comme dans l'exemple illustré aux figures, lorsque le support décoratif 12 et le revêtement décoratif 14 sont destinés à former un « accessoire décoratif intégré » imitant une étiquette collée à la paroi 2 en verre dans un renfoncement de cette dernière, ou tout autre « accessoire décoratif externe » qui serait incrusté dans un renfoncement ménagé dans la paroi 2 en verre sans faire saillie hors dudit renfoncement. Selon une autre variante, l'épaisseur du support décoratif 12 peut être choisie au contraire de manière que la surface 13 dudit support décoratif 12, est agencée au moins en partie au-delà du pourtour 10, c'est-à-dire au-delà d'un plan contenant ledit pourtour 10 (ou une ligne de crête dudit pourtour 10), et donc vers l'extérieur du récipient décoré 1', de manière à générer un effet visuel tridimensionnel prononcé.

De préférence, le pourtour 10 de la portion décorative 9 présente une forme qui suit une forme respective d'un contour du support décoratif 12. Alternativement toutefois, les formes respectives du pourtour 10 de la portion décorative 9 et du contour du support décoratif 12 pourraient éventuellement être sensiblement différentes. Dans l'exemple illustré aux figures, le pourtour 10 qui délimite la portion décorative 9 et le contour du support décoratif 12 présentent une forme générale sensiblement rectangulaire. Pour autant, l'invention n'est évidemment toutefois pas limitée à une telle forme générale sensiblement rectangulaire, et d'autres formes pourront être envisagées en fonction de l'effet décoratif recherché.

L'étape de formation du revêtement décoratif 14, que ce dernier soit monocouche ou multicouche, est préférentiellement réalisée :
- par sérigraphie, par tampographie, et / ou encore par laquage, c'est-à-dire par dépôt d'au moins une couche d'une composition liquide ou pâteuse (telle qu'une encre par exemple) à la surface 13 du support décoratif 12, puis durcissement de ladite composition par séchage et / ou par polymérisation / réticulation (par exemple, à l'aide d'un four de cuisson et / ou par irradiation sous un rayonnement actinique, par exemple sous UV), et / ou
- par marquage à chaud.

Cela permet avantageusement de former ledit revêtement décoratif 14 de manière simple, rapide et efficace, à l'aide de moyens techniques industriels couramment disponibles. Dans le cas où l'étape de formation de formation du revêtement décoratif 14 est réalisée par laquage, ladite composition liquide ou pâteuse peut être appliquée par pulvérisation sur la surface 13 du support décoratif 12, éventuellement après la réalisation d'une opération préalable de dépose ou de formation d'un masque de protection temporaire sur la face externe 5 du récipient 1 pour délimiter la zone à laquer. Une formation du revêtement décoratif 14 par sérigraphie et / ou par marquage à chaud sera préférée lorsque la surface 13 (ou la portion de la surface 13) du support décoratif 12 à revêtir est sensiblement plane. A l'inverse, une formation du revêtement décoratif 14 par tampographie et / ou par laquage sera préférée lorsque la surface 13 (ou la portion de la surface 13) du support décoratif 12 à revêtir est complexe, non plane.

De préférence, quelle que soit la technique de formation employée, ledit revêtement décoratif 14 formé sur le support décoratif 12 présente une épaisseur inférieure ou égale à 300 µm, de préférence encore comprise entre 1 µm et 300 µm, et plus préférentiellement encore comprise entre 20 µm et 200 µm. Le revêtement décoratif 14 est ainsi particulièrement fin, ce qui permet de limiter la quantité totale de matière mise en œuvre, et en particulier la quantité de matière autre que du verre, et contribue ainsi à améliorer encore la recyclabilité du récipient décoré 1'.

De manière avantageuse, le revêtement décoratif 14 est opaque à la lumière visible. En d'autres termes, le revêtement décoratif 14 est conçu, notamment en termes de choix de composition et d'épaisseur, de manière que le verre formant le support décoratif 13 sous-jacent ainsi que le produit cosmétique qui sera contenu dans la cavité 3 ne sont pas visibles, à l'œil nu et sous un éclairage en lumière visible, à travers ledit revêtement décoratif 14. Cela contribue avantageusement à renforcer l'impression pour le consommateur que le support décoratif 12 et le revêtement décoratif 14 forment un accessoire décoratif distinct de la paroi 2 en verre et rapporté à cette dernière.

Comme dans l'exemple illustré schématiquement à la figure 7, le revêtement décoratif 14 peut recouvrir une portion seulement de la surface 13 du support décoratif 12. Par exemple, le revêtement décoratif 14, éventuellement opaque, peut ainsi ne recouvrir que la portion de surface supérieure 13A du support décoratif 12, la portion de surface latérale 13B définie par le ou les murs latéraux de ce dernier étant en revanche dépourvus dudit revêtement décoratif 14. Pour autant, ledit revêtement décoratif 14 peut alors avantageusement recouvrir de manière continue (et donc non ajourée) la totalité de la portion de surface supérieure 13A du support décoratif 12.

De manière plus avantageuse toutefois, comme dans l'exemple illustré schématiquement à la figure 8, le revêtement décoratif 14 recouvre de manière continue (et donc non ajourée) la totalité de la surface 13 du support décoratif 12. Autrement dit, l'étape de formation du revêtement décoratif 14 est alors une étape de formation à la surface 13 du support décoratif 12 d'un revêtement décoratif 14 qui recouvre de manière continue la totalité de ladite surface 13 et qui adhère audit support décoratif 12. A l'issue de ladite l'étape de formation, le revêtement décoratif 14 recouvre alors avantageusement de manière continue à la fois la portion de surface supérieure 13A et la portion de surface latérale 13B dudit support décoratif 12. Cela permet de renforcer encore visuellement l'effet d'imitation de la mise en œuvre d'un accessoire décoratif externe fixé au verre de la paroi 2 du récipient 1. Plus avantageusement encore, le revêtement décoratif 14 pourra alors en outre être choisi opaque à la lumière visible, comme envisagé ci-dessus, ce qui contribue à renforcer encore davantage cet effet d'imitation. Alternativement toutefois, mais de manière moins avantageuse sur le plan notamment de l'effet visuel d'imitation d'un accessoire décoratif externe, le revêtement décoratif 14 peut recouvrir de manière discontinue, et par exemple de manière ajourée, la portion de surface supérieure 13A du support décoratif 12, par exemple de sorte que le produit cosmétique contenu dans le récipient décoré 1' est visible depuis l'extérieur de ce dernier, à travers une ou plusieurs zone(s) de la portion de surface supérieure 13A du support décoratif 12 non recouverte(s) par le revêtement décoratif 14. Dans ce cas, le revêtement décoratif 14 peut en outre recouvrir ou non, de manière continue ou discontinue, la portion de surface latérale 13B dudit support décoratif 12.

Selon une variante préférentielle, le revêtement décoratif 14 formé à la surface 13 du support décoratif 12 imite, reproduit, un aspect visuel d'un matériau autre que le verre, tel que par exemple un aspect visuel d'un métal, d'un bois, d'un cuir ou d'une pierre. En d'autres termes, le revêtement décoratif 14 présente un aspect visuel qui est très similaire ou même sensiblement identique à un aspect visuel d'un matériau donné autre que le verre. Par exemple, le revêtement décoratif 14 peut présenter un aspect visuel imitant :
- un aspect visuel d'un métal poli ou brossé, mat ou brillant (acier, aluminium, argent, or, cuivre, etc.),
- un aspect visuel veiné d'une essence particulière de bois,
- un aspect visuel grainé et écaillé d'un cuir animal particulier,
- un aspect visuel coloré, granuleux ou encore marbré d'une pierre ou d'un assemblage minéral,
- un aspect visuel fibreux, gaufré ou encore froissé d'un papier ou d'un carton, etc.

Ainsi, le support décoratif 12 et le revêtement décoratif 14 porté par ce dernier peuvent avantageusement former un « accessoire décoratif intégré » imitant un accessoire décoratif externe en métal, en bois, en cuir, en pierre, en papier / carton, etc. qui aurait été incrusté dans la paroi 2 en verre et solidarisé à cette dernière.

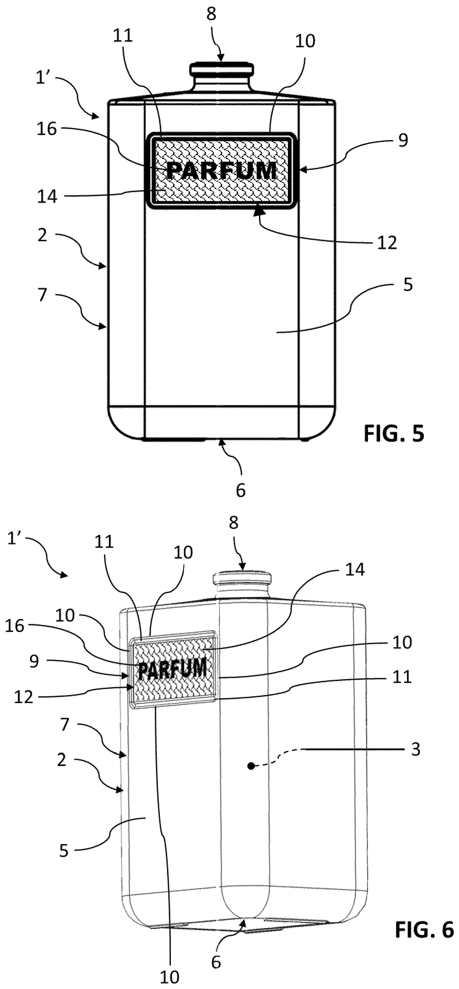

De manière alternative ou complémentaire, le revêtement décoratif 14 peut comprendre ou former un élément scriptural 16 (schématisé en exemple par le mot « PARFUM » aux figures 5 et 6) et / ou un logotype, permettant par exemple d'identifier le produit cosmétique contenu dans le récipient 1 ou à tout le moins certaines caractéristiques dudit produit cosmétique (nature, marque commerciale, ingrédients, etc.).

Afin d'améliorer encore l'aptitude au recyclage du récipient décoré 1', il est particulièrement avantageux de prévoir que le revêtement décoratif 14 formé à la surface 13 du support décoratif 12 est composé à au moins 50 % en masse, de préférence à au moins 75 % en masse, de préférence encore à au moins 90 % en masse, et idéalement à 100 % en masse, par de la matière organique. En particulier, le revêtement décoratif 14 n'est donc avantageusement pas essentiellement formé par un métal ou un alliage métallique, ou encore par un matériau céramique. Ainsi, le ou les matériaux formant le revêtement décoratif 14 pourront être facilement dégradés, détruits, en particulier lors d'une fusion ultérieure du verre du récipient décoré 1' en vue de sa réutilisation, de son recyclage, et ce avec un risque limité de contamination problématique du bain de verre fondu.

Par ailleurs, la mise en œuvre d'un tel revêtement décoratif 14 composé à au moins 50 % en masse par de la matière organique permet avantageusement de faciliter la fabrication du récipient décoré 1', avec un impact énergétique maîtrisé, puisqu'il est possible de former ledit revêtement décoratif 14 à partir d'une composition liquide ou pâteuse qui est ensuite durcie (typiquement par séchage et / ou par polymérisation / réticulation) dans des conditions moins contraignantes et énergivores que dans le cas de la formation d'un revêtement décoratif essentiellement formé d'un métal ou d'un matériau céramique par exemple. L'étape de formation du revêtement décoratif 14 peut ainsi comprendre une opération d'application, de dépôt, d'une couche d'une composition liquide ou pâteuse à base organique (dans laquelle sont éventuellement dispersées des particules inorganiques) à recouvrement de la surface 13 du support décoratif 12, suivie d'une opération de durcissement de ladite composition liquide ou pâteuse, par exemple par séchage et / ou par réticulation, par exemple sous rayonnement ultraviolet et par traitement thermique à 150 °C. A l'inverse, un revêtement décoratif qui serait par exemple essentiellement formé d'un métal, par exemple d'or, nécessiterait une opération de cuisson à haute température, typiquement de l'ordre de 600 °C pour de l'or.

Qui plus est, un tel caractère majoritairement organique du revêtement décoratif 14 permet avantageusement la formation de ce dernier directement sur la surface 13 du support décoratif 12, c'est-à-dire directement sur le verre nu de la paroi 2 du récipient 1, ou sur un éventuel revêtement décoratif externe (tel qu'envisagé dans ce suit) qui aurait été préalablement formé (ou qui serait en cours de formation) sur la surface 13 du support décoratif 12. Dans ce dernier cas, il est dès lors possible d'obtenir aisément une multitude d'effets décoratifs différents par superposition dudit revêtement décoratif 14 sur un ou plusieurs revêtement(s) décoratif(s) externe(s). A l'inverse, les conditions de formation d'un revêtement décoratif essentiellement formé d'un métal ou d'un matériau céramique par exemple, notamment en termes de température, imposerait une formation d'un tel revêtement décoratif à même le verre de la paroi 2 du récipient 1, au risque sinon d'endommager un revêtement décoratif externe qui aurait été préalablement formé (ou qui serait en cours de formation) à la surface 13 du support décoratif 12.

De préférence, dans le cas où le revêtement décoratif 14 est formé à partir d'une composition liquide ou pâteuse déposée à la surface 13 du support décoratif 12, comme envisagé précédemment, ladite composition liquide ou pâteuse sera choisie à base aqueuse, afin d'éviter la mise en œuvre de solvant(s) organique(s) pouvant avoir des effets délétères sur la santé humaine et / ou sur l'environnement.

De manière optionnelle, le procédé de fabrication du récipient décoré 1' peut comprendre une étape de formation d'un revêtement décoratif externe (non illustré) sur la face externe 5 de la paroi 2 du récipient 1, ou à tout le moins sur une portion au moins de ladite face externe 5, lequel revêtement décoratif externe est alors distinct dudit revêtement décoratif 14 adhérant audit support décoratif 12. Par exemple réalisé par sérigraphie, tampographie, laquage et / ou encore par marquage à chaud, ledit revêtement décoratif externe contribue avantageusement au décor du récipient 1. En tout état de cause, ledit revêtement décoratif externe est alors non superposé au revêtement décoratif 14 adhérant audit support décoratif 12, de sorte qu'il ne masque donc pas ledit revêtement décoratif 14. Le revêtement décoratif 14 n'est donc pas interposé entre la surface 13 du support décoratif 12 et ledit revêtement décoratif externe, et la surface du revêtement décoratif 14 reste donc libre. Pour autant, il est envisageable de prévoir que ledit revêtement décoratif externe recouvre tout ou partie de ladite portion décorative 9 de la face externe 5, et en particulier le ou les murs latéraux 15 et / ou le fond 11 de cette dernière. Le cas échéant, ledit revêtement décoratif externe pourra alors être interposé entre la surface 13 du support décoratif 12 et le revêtement décoratif 14 porté par ladite surface 13. Afin de faciliter la fabrication du récipient décoré 1', ladite étape de formation d'un revêtement décoratif externe sera alors préférentiellement réalisée préalablement à la réalisation de l'étape de formation à la surface 13 du support décoratif 12 dudit revêtement décoratif 14 adhérant audit support décoratif 12.

Toujours de manière optionnelle, dans le cas en particulier où le verre formant la paroi 2 du récipient 1 est choisi transparent, le procédé de fabrication du récipient décoré 1' peut comprendre une étape de formation d'un revêtement décoratif interne (non illustré) sur la face interne 4 de la paroi 2 du récipient 1, ou à tout le moins sur une portion au moins de ladite face interne 4. Réalisé de préférence par laquage à l'aide d'une buse de pulvérisation introduite à l'intérieur de la cavité 3 du récipient 1, un tel revêtement décoratif interne contribue avantageusement au décor du récipient 1, le revêtement décoratif interne ainsi formé étant visible depuis l'extérieur de la cavité 3 à travers la paroi 2 en verre. Il est alors toutefois préférable que le revêtement décoratif 14 audit support décoratif 12 soit choisi opaque à la lumière visible, comme envisagé précédemment, de manière que le revêtement décoratif interne ne soit pas visible à travers ledit revêtement décoratif 14, ce qui pourrait nuire éventuellement à l'effet esthétique produit par ce dernier. Afin d'éviter notamment tout risque de coulure ou de bavure susceptible d'endommager le revêtement décoratif 14, ladite étape de formation d'un revêtement décoratif interne sera alors préférentiellement réalisée préalablement à la réalisation de l'étape de formation à la surface 13 du support décoratif 12 dudit revêtement décoratif 14 adhérant audit support décoratif 12.

Il est préférable que le matériau formant un tel revêtement décoratif interne optionnel soit choisi chimiquement résistant au produit cosmétique destiné à être contenu dans le récipient décoré 1' ainsi obtenu, de manière que ledit produit cosmétique puisse être mis en contact direct avec le revêtement décoratif interne, sans qu'il ne soit donc nécessaire de prévoir une poche plastique ou autre pour isoler le produit cosmétique du revêtement décoratif interne. A ce titre, ladite étape optionnelle de formation d'un revêtement décoratif interne peut être réalisée par pulvérisation à la surface de la face interne 4 de la paroi 2 en verre du récipient 1 d'une composition liquide contenant un sol destiné à (c'est-à-dire formulé pour, conçu pour) former un matériau solide par voie sol-gel (ou « matériau sol-gel »), c'est-à-dire selon un procédé de synthèse sol-gel, et au moins une substance colorante (pigment(s) et / ou teinture(s)). Les procédés sol-gel sont bien connus en tant que tel, de sorte qu'il n'est pas nécessaire d'en détailler ici plus en détail les mécanismes réactionnels qu'ils mettent en œuvre. De préférence, il s'agira alors d'un sol comprenant un précurseur de silice.

L'invention concerne en outre, en tant que tel, un récipient 1' en verre destiné à contenir un produit cosmétique, par exemple un parfum corporel, et plus spécifiquement un récipient décoré 1' en verre. Le récipient décoré 1' conforme à l'invention est susceptible d'être obtenu par le procédé de fabrication conforme à l'invention décrit dans ce qui précède, et est de préférence directement obtenu par le procédé en question. Par conséquent, la description qui précède concernant le procédé de fabrication s'applique avantageusement mutatis mutandis au récipient décoré 1' selon l'invention. Un exemple de réalisation d'un récipient décoré 1' conforme à l'invention, qui constitue ici plus spécifiquement un flacon, est illustré en exemple aux figures 5 à 8.

Le récipient décoré 1' conforme à l'invention comprend une paroi 2 en verre (verre minéral), laquelle paroi 2 délimite une cavité 3 de réception pour le produit cosmétique à contenir et présente une face interne 4 située en regard de ladite cavité 3 et une face externe 5 opposée. De manière avantageuse, la paroi 2 du récipient décoré 1' constitue une pièce de verre minéral monolithique, c'est-à-dire d'un seul tenant, qui définit en son sein ladite cavité 3. De préférence, le récipient décoré 1' est en verre moulé.

Conformément à l'invention, ladite face externe 5 présente une portion décorative 9, c'est-à-dire une zone particulière à visée décorative, qui est délimitée au moins partiellement par un pourtour 10 (ou « bord ») et qui présente un fond 11 en creux par rapport audit pourtour 10. Ledit fond 11 est donc agencé en retrait dans la paroi 2 en verre par rapport audit pourtour 10. Typiquement, le fond 11 de la portion décorative 9 présente une face interne 11A, qui est orientée vers l'intérieur du récipient 1 et qui définit une portion de la face interne 4 de la paroi 2 en verre de ce dernier, et une face externe 11B opposée, orientée vers l'extérieur du récipient 1. De préférence, ledit pourtour 10 est refermé sur lui-même et délimite donc intégralement ladite portion décorative 9. Ladite portion décorative 9 comporte en outre un support décoratif 12 (ou « base décorative » ou encore « conformation décorative ») qui vient de matière avec le verre formant la face externe 5 de la paroi 2 et qui fait saillie du fond 11 de la portion décorative 9. En d'autres termes, ledit support décoratif 12 forme une pièce de verre monolithique, d'un seul tenant, avec la paroi 2, et fait saillie de la face externe 11B du fond 11 de la portion décorative 9 vers l'extérieur du récipient décoré 1'. Ledit support décoratif 12 appartient donc à la paroi 2 en verre, et est formé par continuité de matière avec cette dernière.

Par ailleurs, la surface 13 du support décoratif 12 est pourvue d'un revêtement décoratif 14 qui adhère audit support décoratif 12. Le revêtement décoratif 14 forme donc avantageusement une couche mince de plaquage décoratif agencée à la surface 13 du support décoratif 12 en verre. Le revêtement décoratif 14 constitue ainsi avantageusement une couche superficielle du récipient décoré 1' qui recouvre une partie au moins, et de préférence la totalité de, la surface 13 du support décoratif 12, et contribue à l'effet décoratif de la portion décorative 9 en apportant à cette dernière une texture particulière (couleur, brillance / matité, motifs, aspect de surface, etc.). Le revêtement décoratif 14 peut être un revêtement monocouche ou, au contraire, comprendre une pluralité de couches superposées, et donc former un revêtement multicouche. Avantageusement, la surface de la portion de la face externe 5 de la paroi 2 en verre qui s'étend au-delà dudit pourtour 10, et en dehors de la portion décorative 9, est en revanche dépourvue dudit revêtement décoratif 14. De préférence, le fond 11 de la portion décorative 9 est dépourvu dudit revêtement décoratif 10. Cela contribue avantageusement à mieux faire ressortir visuellement le support décoratif 12 et le revêtement décoratif 14 porté par ce dernier.

Ainsi, comme expliqué précédemment en lien avec le procédé selon l'invention, le support décoratif 12 et le revêtement décoratif 14 dont est pourvu ce dernier forment avantageusement un « accessoire décoratif intégré », qui imite la présence d'un accessoire décoratif externe classique, c'est-à-dire d'une pièce décorative solide distincte de la paroi 2 en verre du récipient décoré 1' qui serait rapportée et fixée à cette dernière (par exemple par collage), mais qui en supprime avantageusement les inconvénients précités.

Avantageusement, le récipient décoré 1' est dépourvu d'élément décoratif externe (ou « accessoire décoratif externe ») solide en un matériau différent du verre formant ladite paroi 2, qui serait apporté et fixé à cette dernière (par exemple par collage). L'intérêt de l'invention s'en trouve ainsi renforcé.

Comme évoqué en lien avec le procédé selon l'invention, la surface 13 du support décoratif 12 peut typiquement comprendre une portion de surface supérieure 13A, qui est prolongée par au moins une portion de surface latérale 13B, qui relie ladite portion de surface supérieure 13A à la face externe 11B du fond 11 de la portion décorative 9. Ladite portion de surface latérale 13B peut ainsi correspondre à la surface d'un ou plusieurs murs latéraux que peut comporter le support décoratif 12 et qui s'élèvent en saillie dudit fond 11. Lesdits murs latéraux définissent ainsi avantageusement un contour du support décoratif 12. La portion de surface supérieure 13A du support décoratif 12 peut être sensiblement plane, ou présenter au contraire un profil tridimensionnel particulier. Par ailleurs, ladite surface 13 peut être prévue lisse, ou au contraire texturée, rugueuse.

De manière préférentielle, le support décoratif 12 s'étend en saillie dudit fond 11 de la portion décorative 9 suivant une épaisseur maximale Emax (telle que définie précédemment) d'au moins 0,2 mm, de préférence encore d'au moins 0,3 mm, et de préférence d'au plus 3 mm. Ainsi, l'épaisseur du support décoratif 12 est bien perceptible à l'œil nu, même si elle peut être relativement faible. Selon une variante, l'épaisseur du support décoratif 12 est sensiblement constante, comme dans l'exemple illustré aux figures, et par exemple de 0,5 mm, en vue d'imiter avantageusement la mise en œuvre d'une étiquette décorative autocollante, par exemple en papier ou en carton. Dans ce cas, la portion de surface supérieure 13A peut ainsi être avantageusement sensiblement plane, comme envisagé ci-dessus. Selon une autre variante, l'épaisseur du support décoratif 12 n'est pas constante en tout point du support décoratif 12, et varie au donc au contraire. Dans ce cas, la portion de surface supérieure 13A peut alors ne pas être plane, mais présenter des points d'altitudes différentes par rapport à la surface de la face externe 11B du fond 11 de la portion décorative 9.

Avantageusement, comme déjà également évoqué précédemment en lien avec le procédé selon l'invention, le support décoratif 12 est relié au fond 11 de la portion décorative 9 par un congé, et non pas par une arête vive, présentant un rayon de courbure d'une valeur préférentiellement comprise entre 0,2 mm et 1,5 mm, plus préférentiellement encore comprise entre 0,5 mm et 1,2 mm, et par exemple égale à 0,5 mm.

De préférence, le revêtement décoratif 14 dont est pourvu le support décoratif 12 présente une épaisseur inférieure ou égale à 300 µm, de préférence encore comprise entre 1 µm et 300 µm, et plus préférentiellement encore comprise entre 20 µm et 200 µm. Le revêtement décoratif 14 est ainsi particulièrement fin, ce qui permet de limiter la quantité totale de matière mise en œuvre, et en particulier la quantité de matière autre que du verre, et contribue ainsi à améliorer encore la recyclabilité du récipient décoré 1'.

De manière avantageuse, le revêtement décoratif 14 est opaque à la lumière visible, de manière que le verre formant le support décoratif 13 sous-jacent ainsi que le produit cosmétique qui sera contenu dans la cavité 3 d'accueil ne sont pas visibles, à l'œil nu et sous un éclairage en lumière visible, à travers ledit revêtement décoratif 14. Comme expliqué précédemment, cela contribue avantageusement à renforcer l'impression pour le consommateur que le support décoratif 12 et le revêtement décoratif 14 forment un accessoire décoratif distinct de la paroi 2 en verre et rapporté à cette dernière.

Comme illustré à la figure 7, le revêtement décoratif 14 peut recouvrir une portion seulement de la surface 13 du support décoratif 12. Par exemple, le revêtement décoratif 14, éventuellement opaque, peut ainsi ne recouvrir que la portion de surface supérieure 13A du support décoratif 12, la portion de surface latérale 13B définie par le ou les murs latéraux de ce dernier étant en revanche dépourvus dudit revêtement décoratif 14. Pour autant, le revêtement décoratif 14 peut alors avantageusement recouvrir de manière continue (et donc non ajourée) la totalité de la portion de surface supérieure 13A du support décoratif 12. De manière plus avantageuse toutefois, comme illustré à la figure 8, le revêtement décoratif 14 recouvre de manière continue (et donc non ajourée) la totalité de la surface 13 du support décoratif 12. Ainsi, le revêtement décoratif 14 recouvre alors avantageusement de manière continue à la fois la portion de surface supérieure 13A et la portion de surface latérale 13B dudit support décoratif 12.

Comme évoqué précédemment, cela permet de renforcer encore visuellement l'effet d'imitation de la présence d'un accessoire décoratif externe fixé au verre de la paroi 2 du récipient 1. Plus avantageusement encore, le revêtement décoratif 14 pourra alors en outre être choisi opaque à la lumière visible, comme envisagé ci-dessus, ce qui contribue à renforcer encore davantage cet effet d'imitation. Alternativement toutefois, mais de manière moins avantageuse sur le plan notamment de l'effet visuel d'imitation d'un accessoire décoratif externe, le revêtement décoratif 14 peut recouvrir de manière discontinue, et par exemple de manière ajourée la portion de surface supérieure 13A du support décoratif 12, par exemple de sorte que le produit cosmétique contenu dans le récipient décoré 1' est visible depuis l'extérieur de ce dernier, à travers une ou plusieurs zone(s) de la portion de surface supérieure 13A du support décoratif 12 non recouverte(s) par le revêtement décoratif 14. Dans ce cas, le revêtement décoratif 14 peut en outre recouvrir ou non, de manière continue ou discontinue, la portion de surface latérale 13B dudit support décoratif 12.

Comme on le comprend à la lecture de ce qui précède, il est particulièrement avantageux que le revêtement décoratif 14 soit préférentiellement composé à au moins 50 % en masse, de préférence à au moins 75 % en masse, de préférence encore à au moins 90 % en masse, et idéalement à 100 % en masse, par de la matière organique.

Selon une variante préférentielle, le revêtement décoratif 14 dont est pourvue la surface 13 du support décoratif 12 imite, reproduit, un aspect visuel d'un matériau autre que le verre, tel que par exemple un aspect visuel d'un métal, d'un bois, d'un cuir ou d'une pierre. En d'autres termes, le revêtement décoratif 14 présente un aspect visuel qui est très similaire ou même sensiblement identique à un aspect visuel d'un matériau donné autre que le verre, conformément à ce qui a été décrit précédemment en lien avec le procédé selon l'invention.

De manière optionnelle, la face externe 5 de la paroi 2 du récipient décoré 1', ou à tout le moins sur une portion au moins de ladite face externe 5, est pourvue d'un revêtement décoratif externe (non illustré), lequel revêtement décoratif externe est alors distinct dudit revêtement décoratif 14 adhérant audit support décoratif 12, et est non superposé audit revêtement décoratif 14. La surface du revêtement décoratif 14 reste donc libre, n'étant donc pas masquée par le revêtement décoratif externe. Pour autant, il est envisageable de prévoir que ledit revêtement décoratif externe recouvre tout ou partie de ladite portion décorative 9 de la face externe 5, et en particulier le ou les murs latéraux 15 et / ou le fond 11 de cette dernière. Le cas échéant, ledit revêtement décoratif externe pourra alors être interposé entre la surface 13 du support décoratif 12 et le revêtement décoratif 14 porté par ladite surface 13.

Toujours de manière optionnelle, dans le cas en particulier où le verre formant la paroi 2 du récipient 1 est transparent, la face interne 4 de la paroi 2 du récipient décoré 1', ou à tout le moins sur une portion au moins de ladite face interne 5, peut être pourvue d'un revêtement décoratif interne (non illustré).

L'invention permet en définitive d'obtenir des récipients en verre pour produits cosmétiques présentant des effets de décoration remarquables, et un impact environnemental pour autant minimal grâce, en particulier, à une excellente aptitude au recyclage desdits récipients.

## Revendications

1. Procédé de fabrication d'un récipient décoré (1') en verre destiné à contenir un produit cosmétique, par exemple un parfum corporel, comprenant :
- une étape de fabrication ou de fourniture d'un récipient (1) à paroi (2) en verre, laquelle paroi (2) délimite une cavité (3) de réception pour le produit cosmétique à contenir et présente une face interne (4) située en regard de ladite cavité (3) et une face externe (5) opposée, ladite face externe (5) présentant une portion décorative (9) délimitée au moins partiellement par un pourtour (10) et présentant un fond (11) en creux par rapport audit pourtour (10), ladite portion décorative (9) comportant un support décoratif (12) qui vient de matière avec le verre formant la face externe (5) et qui fait saillie dudit fond (11) ; et
- une étape de formation à la surface (13) du support décoratif (12) d'un revêtement décoratif (14) adhérant audit support décoratif (12), ledit revêtement décoratif (14) étant composé à au moins 50 % en masse par de la matière organique.

2. Procédé selon la revendication précédente, dans lequel ledit revêtement décoratif (14) présente une épaisseur inférieure ou égale à 300 µm, de préférence encore comprise entre 1 µm et 300 µm, et plus préférentiellement encore comprise entre 20 µm et 200 µm.

3. Procédé selon l'une quelconque des revendications précédentes, dans lequel le revêtement décoratif (14) est opaque à la lumière visible.

4. Procédé selon l'une quelconque des revendications précédentes, dans lequel le revêtement décoratif (14) recouvre de manière continue la totalité de la surface (13) du support décoratif (12).

5. Procédé selon l'une quelconque des revendications précédentes, dans lequel le revêtement décoratif (14) imite un aspect visuel d'un matériau autre que le verre, tel que par exemple un aspect visuel d'un métal, d'un bois, d'un cuir ou d'une pierre.

6. Procédé selon l'une quelconque des revendications précédentes, dans lequel l'étape de formation du revêtement décoratif (14) est réalisée par sérigraphie, par tampographie, par laquage et / ou par marquage à chaud.

7. Procédé selon l'une quelconque des revendications précédentes, dans lequel le revêtement décoratif (14) est composé à au moins 75 % en masse par de la matière organique.

8. Procédé selon l'une quelconque des revendications précédentes, lequel comprend une étape de formation d'un revêtement décoratif externe sur la face externe (5) de la paroi (2) du récipient (1), lequel revêtement décoratif externe est distinct du revêtement décoratif (14) adhérant audit support décoratif (12) et non superposé audit revêtement décoratif (14).

9. Récipient décoré (1') en verre destiné à contenir un produit cosmétique, par exemple un parfum corporel, comprenant une paroi (2) en verre, laquelle paroi (2) délimite une cavité (3) de réception pour le produit cosmétique à contenir et présente une face interne (4) située en regard de ladite cavité (3) et une face externe (5) opposée, ladite face externe (5) présentant une portion décorative (9) délimitée au moins partiellement par un pourtour (1) et présentant un fond (11) en creux par rapport audit pourtour (10), ladite portion décorative (9) comportant un support décoratif (12) qui vient de matière avec le verre formant la face externe (5) et qui fait saillie dudit fond (11), la surface (13) du support décoratif (12) étant pourvue d'un revêtement décoratif (14) qui adhère audit support décoratif (12), ledit revêtement décoratif (14) étant composé à au moins 50 % en masse par de la matière organique.

10. Récipient décoré (1') selon la revendication précédente, dans lequel le support décoratif (12) s'étend en saillie dudit fond (11) suivant une épaisseur maximale (Eₘₐₓ) d'au moins 0,2 mm, et de préférence d'au plus 3 mm.

11. Récipient décoré (1') selon l'une quelconque des revendications 9 et 10, dans lequel ledit revêtement décoratif (14) présente épaisseur inférieure ou égale à 300 µm, de préférence encore comprise entre 1 µm et 300 µm, et plus préférentiellement encore comprise entre 20 µm et 200 µm.

12. Récipient décoré (1') selon l'une quelconque des revendications 9 à 11, dans lequel le revêtement décoratif (14) est opaque à la lumière visible.

13. Récipient décoré (1') selon l'une quelconque des revendications 9 à 12, dans lequel le revêtement décoratif (14) recouvre de manière continue la totalité de la surface (13) du support décoratif (12).

14. Récipient décoré (1') selon l'une quelconque des revendications 9 à 13, dans lequel le revêtement décoratif (14) imite un aspect visuel d'un matériau autre que le verre, tel que par exemple un aspect visuel d'un métal, d'un bois, d'un cuir ou d'une pierre.

15. Récipient décoré (1') selon l'une quelconque des revendications 9 à 14, dans lequel la face externe (5) de ladite paroi (2) est pourvue d'un revêtement décoratif externe, lequel revêtement décoratif externe est distinct du revêtement décoratif (14) adhérant audit support décoratif (12) et non superposé audit revêtement décoratif (14).

## Patentansprüche

1. Verfahren zur Herstellung eines dekorierten Behälters (1') aus Glas zur Aufnahme eines Kosmetikprodukts, beispielsweise eines Körperparfüms, umfassend:
- einen Schritt des Herstellens oder Bereitstellens eines Behälters (1) mit einer Wand (2) aus Glas, wobei diese Wand (2) einen Hohlraum (3) zur Aufnahme für das Kosmetikprodukt begrenzt und eine Innenseite (4), welche dem Hohlraum (3) zur Aufnahme zugewandt ist, und eine gegenüberliegende Außenseite (5) aufweist, wobei besagte Außenseite (5) einen dekorativen Bereich (9) aufweist, der zumindest teilweise durch eine Umgrenzung (10) begrenzt ist und einen gegenüber besagter Umgrenzung (10) zurückgesetzten Boden (11) aufweist, wobei besagter dekorativer Bereich (9) einen dekorativen Träger (12) umfasst, welcher einstückig mit dem die Außenseite (5) bildenden Glas ausgebildet ist und von besagtem Boden (11) vorsteht; und
- einen Schritt des Ausbildens einer dekorativen Beschichtung (14) auf der Oberfläche (13) des dekorativen Trägers (12), welche an besagtem dekorativen Träger (12), wobei besagte dekorative Beschichtung (14) zu mindestens 50 Masse-% aus organischem Material besteht.

2. Verfahren nach dem vorhergehenden Anspruch, wobei die dekorative Beschichtung (14) eine Dicke von höchstens 300 µm aufweist, bevorzugt zwischen 1 µm und 300 µm und am besonders bevorzugt zwischen 20 µm und 200 µm.

3. Verfahren nach einem der vorhergehenden Ansprüche, wobei die dekorative Beschichtung (14) für sichtbares Licht opak ist.

4. Verfahren nach einem der vorhergehenden Ansprüche, wobei die dekorative Beschichtung (14) die gesamte Oberfläche (13) des dekorativen Trägers (12) durchgehend bedeckt.

5. Verfahren nach einem der vorhergehenden Ansprüche, wobei die dekorative Beschichtung (14) den visuellen Anblick eines anderen Materials als Glas nachahmt, wie beispielsweise einen visuellen Anblick eines Metalls, eines Holzes, eines Leders oder eines Steins.

6. Verfahren nach einem der vorhergehenden Ansprüche, wobei der Schritt der Ausbildens der dekorativen Beschichtung (14) durch Siebdruck, Tampondruck, Lackieren und/oder Heißprägen durchgeführt wird.

7. Verfahren nach einem der vorgehenden Ansprüche, wobei die dekorative Beschichtung (14) zu mindestens 75 Masse-% aus organischem Material besteht.

8. Verfahren nach einem der vorhergehenden Ansprüche, welches einen Schritt des Bildens einer äußeren dekorativen Beschichtung auf der Außenseite (5) der Wand (2) des Behälters (1) umfasst, wobei sich diese äußere dekorative Beschichtung von der an besagtem dekorativen Träger (12) haftenden dekorativen Beschichtung (14) unterscheidet und besagte dekorativen Beschichtung (14) nicht überdeckt.

9. Dekorierter Glasbehälter (1') zur Aufnahme eines Kosmetikprodukts, beispielsweise eines Körperparfüms, der eine Wand (2) aus Glas umfasst, wobei diese Wand (2) einen Hohlraum (3) zur Aufnahme für das Kosmetikprodukt begrenzt und eine Innenseite (4), die dem Hohlraum (3) zugewandt ist, und eine gegenüberliegende Außenseite (5) aufweist, wobei besagte Außenseite (5) einen dekorativen Bereich (9) aufweist, der zumindest teilweise durch eine Umgrenzung (1) begrenzt wird und einen gegenüber der Umgrenzung (10) zurückgesetzten Boden (11) aufweist, wobei besagter dekorativer Abschnitt (9) einen dekorativen Träger (12) umfasst, welcher einstückig mit dem die Außenseite (5) bildenden Glas ausgebildet ist und von besagtem Boden (11) vorsteht, wobei die Oberfläche (13) des dekorativen Trägers (12) mit einer dekorativen Beschichtung (14) versehen ist, die an besagtem dekorativen Träger (12) haftet, wobei besagte dekorative Beschichtung (14) zu mindestens 50 Masse-% aus organischem Material besteht.

10. Dekorierter Behälter (1') nach dem vorhergehenden Anspruch, wobei der dekorative Träger (12) von besagtem Boden (11) mit einer maximalen Dicke (Eₘₐₓ) von mindestens 0,2 mm und bevorzugt von höchstens 3 mm vorsteht.

11. Dekorierter Behälter (1') nach einem der Ansprüche 9 und 10, wobei besagte dekorative Beschichtung (14) eine Dicke von höchstens 300 µm aufweist, bevorzugt zwischen 1 µm und 300 µm und besonders bevorzugt zwischen 20 µm und 200 µm.

12. Dekorierter Behälter (1') nach einem der Ansprüche 9 bis 11, wobei die dekorative Beschichtung (14) für sichtbares Licht opak ist.

13. Dekorierter Behälter (1') nach einem der Ansprüche 9 bis 12, wobei die dekorative Beschichtung (14) die gesamte Oberfläche (13) des dekorativen Trägers (12) durchgehend bedeckt.

14. Dekorierter Behälter (1') nach einem der Ansprüche 9 bis 13, wobei die dekorative Beschichtung (14) das visuellen Anblick eines anderen Materials als Glas nachahmt, wie beispielsweise einen visuellen Anblick eines Metalls, eines Holzes, eines Leders oder eines Steins.

15. Dekorierter Behälter (1') nach einem der Ansprüche 9 bis 14, wobei die Außenseite (5) besagter Wand (2) mit einer äußeren dekorativen Beschichtung versehen ist, wobei sich diese äußere dekorative Beschichtung von der an besagtem dekorativen Träger (12) haftenden dekorativen Beschichtung (14) unterscheidet und besagte dekorativen Beschichtung (14) nicht überlagert.

## Claims

1. A method for manufacturing a decorated glass container (1') intended to contain a cosmetic product, for example a body fragrance, comprising:
- a step of manufacturing or providing a container (1) with a glass wall (2), which wall (2) delimits a cavity (3) for receiving the cosmetic product to be contained therein and has an internal face (4) facing said cavity (3) and an opposite external face (5), said external face (5) having a decorative portion (9) delimited at least partially by a perimeter (10) and having a recessed bottom (11) relative to said perimeter (10), said decorative portion (9) including a decorative support (12) formed integrally with the glass forming the external face (5) and projecting from said bottom (11); and
- a step of forming, on the surface (13) of the decorative support (12), a decorative coating (14) adhering to said decorative support (12), said decorative coating (14) being composed of at least 50% by mass of organic material.

2. The method according to the preceding claim, wherein said decorative coating (14) has a thickness less than or equal to 300 µm, preferably between 1 µm and 300 µm, and more preferably between 20 µm and 200 µm.

3. The method according to any one of the preceding claims, wherein the decorative coating (14) is opaque to visible light.

4. The method according to any one of the preceding claims, wherein the decorative coating (14) continuously covers the entire surface (13) of the decorative support (12).

5. The method according to any one of the preceding claims, wherein the decorative coating (14) imitates the visual appearance of a material other than glass, such as, for example, the visual appearance of metal, wood, leather, or stone.

6. The method according to any one of the preceding claims, wherein the step of forming the decorative coating (14) is carried out by screen printing, pad printing, lacquering, and/or hot stamping.

7. The method according to any one of the preceding claims, wherein the decorative coating (14) is composed of at least 75% by mass of organic material.

8. The method according to any one of the preceding claims, which comprises a step of forming an external decorative coating on the external face (5) of the wall (2) of the container (1), which external decorative coating is distinct from the decorative coating (14) adhering to said decorative support (12) and not superimposed on said decorative coating (14).

9. A decorated glass container (1') intended to contain a cosmetic product, for example a body fragrance, comprising a glass wall (2), which wall (2) delimits a cavity (3) for receiving the cosmetic product to be contained therein and has an internal face (4) facing said cavity (3) and an opposite external face (5), said external face (5) having a decorative portion (9) delimited at least partially by a perimeter (10) and having a recessed bottom (11) relative to said perimeter (10), said decorative portion (9) including a decorative support (12) formed integrally with the glass forming the external face (5) and projecting from said bottom (11), the surface (13) of the decorative support (12) being provided with a decorative coating (14) adhering to said decorative support (12), said decorative coating (14) being composed of at least 50% by mass of organic material.

10. The decorated container (1') according to the preceding claim, wherein the decorative support (12) projects from said bottom (11) with a maximum thickness (Eₘₐₓ) of at least 0.2 mm, and preferably at most 3 mm.

11. The decorated container (1') according to any one of claims 9 and 10, wherein said decorative coating (14) has a thickness less than or equal to 300 µm, preferably between 1 µm and 300 µm, and more preferably between 20 µm and 200 µm.

12. The decorated container (1') according to any one of claims 9 to 11, wherein the decorative coating (14) is opaque to visible light.

13. The decorated container (1') according to any one of claims 9 to 12, wherein the decorative coating (14) continuously covers the entire surface (13) of the decorative support (12).

14. The decorated container (1') according to any one of claims 9 to 13, wherein the decorative coating (14) imitates the visual appearance of a material other than glass, such as, for example, the visual appearance of metal, wood, leather, or stone.

15. The decorated container (1') according to any one of claims 9 to 14, wherein the external face (5) of said wall (2) is provided with an external decorative coating, said external decorative coating being distinct from the decorative coating (14) adhering to said decorative support (12) and not superimposed on said decorative coating (14).
